# EUROPEAN PATENT APPLICATION

(11) **EP 4 088 573 A1**
(43) Date of publication of application: **16.11.2022**
(21) Application number: 20911891.8
(22) Date of filing: 29.12.2020
(51) Int. Cl.: A01L 7/00, A01L 11/00, A41D 13/04

(54) **FARRIER'S APRON WITH STOP ELEMENTS**

(30) Priority: 10.01.2020 ES 202030027 U
(71) Applicant: Sugliano Olivera, Gustavo, 15005 A Coruña (ES); Casado Saez, Alfonso, 19300 Molina De Aragón (Guadalajara) (ES)
(72) Inventor: SANCHEZ MARTINEZ, Constantino, 28770 COLMENAR VIEJO (ES); CASADO SAEZ, Alfonso, 19300 MOLINA DE ARAGON (ES)
(74) Representative: Urizar Anasagasti, Jesus Maria
(86) International application number: PCT/ES2020/070829
(87) International publication number: WO 2021/140261

(57) **Abstract**

The invention relates to a farrier's apron, made from a piece of flexible material, having means for supporting the horse's limbs (B) secured to the front and/or rear thereof, these means being stop elements (3), arranged and secured in different positions and areas of the apron, these stop elements (3) being made of solid pieces of hard-wearing material, such as leather, rope, gum, plastic, rubber, silicone or any other material, lined or not, flat or raised and of different shapes, and secured to the surface of the apron by different means.

## Description

The present application relates to a farrier's apron to be used for shoeing, cleaning, performing veterinary procedures, trimming hooves and any other manoeuvre or task with the equine's limbs that significantly improves the use of similar items on the market and in the current state of the art, additionally offering new capabilities for various activities in caring for horses' limbs.

Namely, this innovation relates to an apron intended for holding the animal's limb on or between the person's legs, offering a support bearing, which mostly prevents injuries caused by incorrect postures and allows greater manoeuvring independence when handling the equine's limbs.

### Technical field

This invention is comprised in the sector related to the equine field, and more specifically to implements for caring for horses' limbs.

### Background of the invention and state of the art

One of the essential implements used as a safety and protective measure is the farrier's apron, made from a series of pieces, generally of leather or other hard-wearing materials, sewn together with different shapes or designs and with belts, buckles and Velcro as means for fitting and securing the apron to the farrier's waist and legs.

There are different models with different measurements, designs and materials, full-legged, knee-length, full-length, two-legged or single-legged, with or without a bib, etc.

There are also aprons that have a series of pockets for housing small tools, such as hoof knives, hoof picks, etc., and small pockets for housing horseshoe nails, making it easier for users as they can carry these items on them.

Another implement that is usually added to the user's apron are magnets intended for picking up and holding the nails and the tips of rivets, making them accessible for when the user needs to use them, preventing them from scattering all over the ground.

Moreover and simultaneously, there are basically at least two kinds of work or activities performed regularly in connection with the horse's limbs.

Shoeing or trimming hooves can be done by two people according to the French technique, where an operator or assistant holds the horse's limb, while the farrier works on the hoof, being situated in a position opposite same.

There is another way to work and it is the most widely used technique today, consisting of the farrier himself, through a series of postures adapted to the horse's anatomy, holds the horse's limb between or on his legs, without needing an assistant, thus being able to work on the hoof protruding from between the farrier's legs. This working technique is referred to as the English technique or shoeing without an assistant.

When the English technique is used, one of the problems, in addition to the difficulty of the posture adopted and the unexpected and sometimes violent movements of the horse, is that the limb slips over the apron, sliding under its own weight and the downward pressure exerted by the horse, requiring the farrier to make an extra effort, sometimes considerable, to keep the limb in a position that allows him or her to keep the hoof accessible for shoeing operations and at the same time comfortable for the horse and, as far as possible, for the user.

The daily care, cleaning, checking and examination of the limbs have always been carried out in uncomfortable and unergonomic positions, which mainly affect the lower back, dorsal muscles and arms, causing constant inflammation of the user's sciatic nerve. It is not easy to manipulate the horse's limbs and get the horse to stand still due to the lack of a point of support for the limb and the imbalance that this generates in the horse; this problem is solved by this invention.

It is important to note that each of the forelimbs weighs between at least 5 and 10 kg, depending on the size of the horse, with the hind limbs weighing between at least 10 and 15 kg. If we add to this the fact that the horse is not usually kept in a static position, and given that all the movement and weight bearing is carried and supported by the user (farrier, keeper, veterinarian, etc.), it is clear that this manoeuvre can be difficult and, even more so, risky as it can cause injuries of different types and severity.

In other words, the work consists of lifting a weight that is also in motion, a weight that increases considerably if the horse leans on the person because it feels unbalanced. In such a situation, the person performing the task is forced to let go of the limb because he lacks the strength and a sufficient point of support to maintain balance and support the full weight of the animal.

It should be added that during the whole manoeuvre the person has to keep their back arched, which is the most likely way to be injured or cause permanent sequelae in the medium or long term. It is important to note that, for these tasks of cleaning, daily care and veterinary examination, there is, so far, no apron that solves the problems described.

At the industrial property level, there are some patents that develop means or systems that intervene in the shoeing of equines in a specific and particular way. This is the case of Spanish patent ES0459766, which includes "a pre-formed strip of flexible material having an L-shaped cross-section attached to both the wall and the peripheral region of the hoof sole around its front and sides; and then a pre-formed horse shoe made of plastic is attached to at least the face of the pre-formed strip opposite the hoof sole". In turn, patent ES1132430U relates to an "improved shoeing device", formed "by a tubular chassis integral with a support bearing by means of an articulation element", said chassis incorporating a housing for a seat post, a container for tools, and wheels.

The above inventions fulfil the function for which they are designed, but do not solve the aforementioned objective technical problem of how to securely position and secure the horse's limb on the apron, so that the practitioner/user can perform shoeing or other related activities more comfortably and safely.

The applicants are not aware that there exists, in the current state of the art, an apron with supports or stop elements that allows work to be done by holding the horse's limbs for shoeing, cleaning, examining, curing or manoeuvring for the necessary purpose, with the technical features detailed in the present patent application.

### Description of the invention

The object of the invention described in this application relates to a farrier's apron with stop elements for working with the horse's limbs in activities for shoeing, cleaning, hoof care, veterinary operations, initial training of young horses for the manipulation of their limbs, or any other similar activity, which incorporates technical features that advantageously modify its conformation.

Namely, said apron has on the surface of its front and/or rear a series of stop elements that act as a point of support for the equine limb, which remains stable and does not slip on the surface of the apron, giving the user easier access to the hoof and greater freedom of use of the hand which, with traditional aprons, had to be used as the main support. Now, with this innovation, it can be used freely and complementarily, and in the case of the horse, it can adopt a really comfortable position, without effort or resistance.

In other words, the purpose of the stop element is essentially to act as a stop or anti-slip for the horse's limbs, thus preventing them from slipping and sliding on the smooth leather of the apron, resulting in the advantages described in this document.

The stop elements are distributed on the front and/or rear of the apron in different positions, as they adapt to the different postures adopted by the user in each of the manoeuvres required for his activity. When located in the rear, they form a bulge protruding from the front of the apron.

As for their conformation, the stop elements are made by solid pieces of hard-wearing material, leather, rope, gum, plastic, rubber, silicone or any other material, lined or not, flat or raised and with different shapes and designs.

Therefore, with this embodiment, it is possible to solve the aforementioned technical objective problem, i.e., to establish a stable support for the equine's limb on the apron surface by securing one or more support stop elements for said limb.

Said stop elements are secured on the rear and/or front of the apron by different means, for example, stitching, introduced in a pocket on the rear or front of the apron or else with the intervention of fastening means, such as Velcro or the like, or with secure bonding adhesive materials with sufficient gripping force.

Alternatively, said stop elements are made with a fold or seam in the fabric itself of the apron, also serving the purpose of acting as a non-slip stop element for the horse's limbs, thus preventing them from slipping on the smooth leather.

In addition, the back of the apron incorporates at least one housing with an opening and a hole in the front or pocket intended for housing fragile items that the user needs to keep within reach, but at the same time in an area that has the advantage of being protected from accidental blows from the animal, e.g., a mobile phone.

### Description of the drawings

To better understand the description in this specification, a set of drawings is attached to be analysed and considered solely by way of example and not in a limiting or restrictive manner.
Figure 1 shows a front view of the apron with a detail of stop elements in different arrangements.
Figure 2 shows a front view of the apron placed on the user's pants with stop elements in different positions.
Figure 3 shows a rear view of the apron with a detail of the rear housing.
Figure 4 shows a perspective view of an example of using the apron in shoeing the hoof of a horse's forelimb.
Figure 5 shows a perspective view of an example of using the apron in shoeing the hoof of a horse's hind limb.

### Description of a preferred embodiment

These figures explicitly show in detail the apron claimed in this application. Common elements such as pockets for housing tools, nails or other items, as well as the arrangement of magnets for nails and rivets are not shown in these figures as they are not part of the invention.

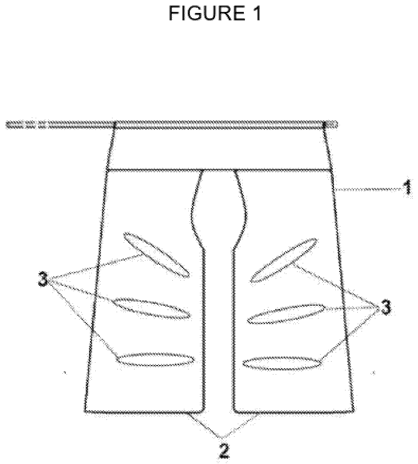

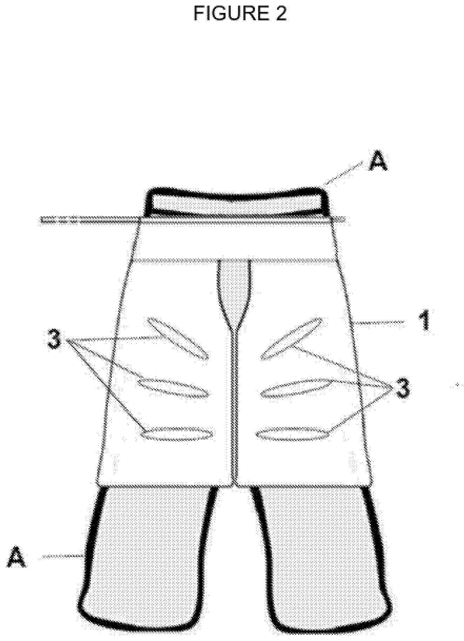

Figure 1 shows the apron (1) that is claimed, made from a piece of flexible material, in this case with two legs (2) and intended for being placed on top of the user's pants (A), as shown in Figure 2.

Both figures show the stop elements (3) arranged in different positions and points of the surface on the front of the apron, these stop elements (3) being of different shapes and/or dimensions, which can also be also can located in the rear of the apron (1).

As shown in Figure 2, the apron is placed and fitted on the user's pants (A), having various means for tying and fastening same such as belts, which are not representative of the invention.

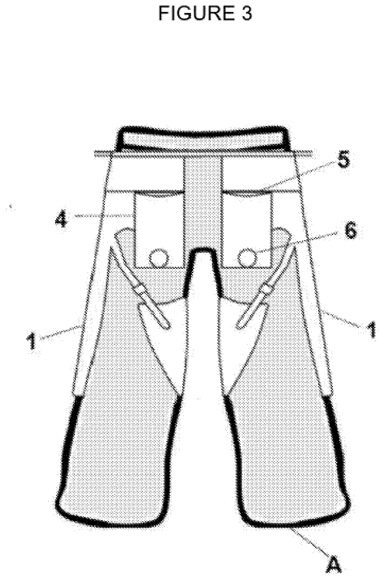

Figure 3 shows the back of the apron, likewise fitted on the user's clothing, the housing (4) being visible, said housing being in the form of a pocket in this example located in the upper part to make it easier for the user to access same with his hand, this housing (4) having an upper opening (5) and a hole (6) in the front intended for the user to quickly insert his fingers in order to push upwards and remove the object, especially a mobile telephone, located in such housing (4).

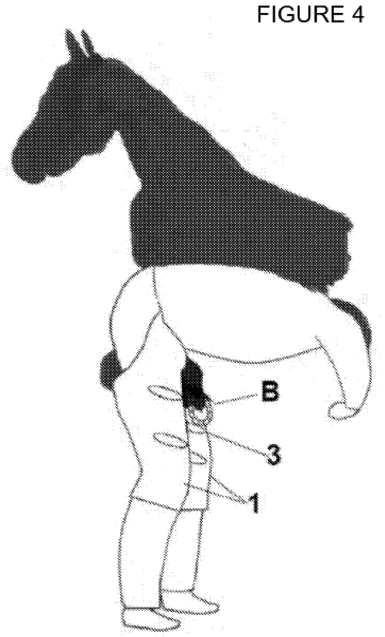

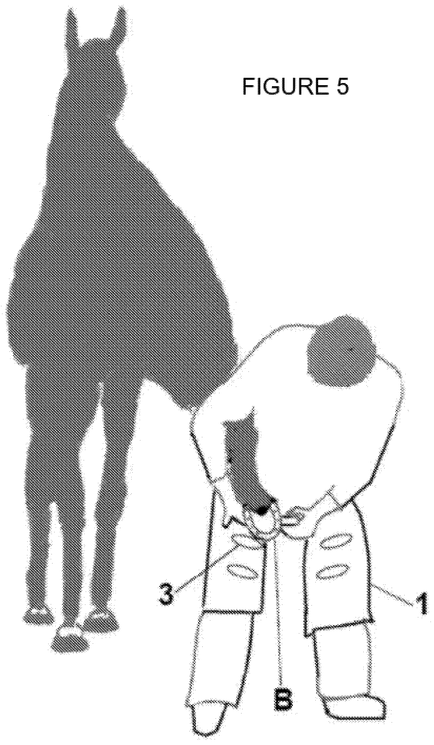

The use of these stop elements (3) is explained in Figures 4 and 5, which show respective examples of the shoeing work on the horse's forelimb (Figure 4) and hind limb (Figure 5), with the hoof (B) supported in the stop element or projection (3) that is the most convenient according to the posture and position of the horse and of the user, i.e., the manner in which said user holds the hoof for more comfortable and accessible work. The horse's hoof (B) is always supported on at least one of the stop elements (3), such that it is prevented from slipping and moving, making the user's job easier and at the same time relaxing the animal as it feels safer by having a stable point of support.

In view of the preceding pages, this apron with stop elements offers the novel advantage over existing aprons in alleviating the posture of the user's legs, since the support traditionally provided by the legs squeezing together in a constant and firm manner to keep the horse's limb still and accessible, is successfully achieved by supporting the horse's limb on the apron stop elements, without the need to use the user's body tension and strength to support the equine's limb.

Another advantage of this invention of the apron with stop elements is that it is equally effective by placing the stop elements on a single leg, which reduces the length of the apron, making it lighter, easier to handle and able to be used interchangeably on either leg of the user. This reduced conformation, which maintains all the technical and structural features of the stop elements, is suitable for daily care tasks, veterinary checks or even in the early stages of training young horses, as these tasks do not require the use of both legs of the user, likewise allowing the user to maintain a correct posture for lifting weight, avoiding arching of the spine, preventing straining in the lumbar area and arms, and on the other hand, it provides stable support to the horse, preventing it from moving.

Until now, the user had to bend at 90 degrees in order to, for example, clean or check a hoof, grabbing the hoof with one hand, holding the entire limb with said arm in order to, with the other hand, use the necessary tools for the work to be carried out.

With this apron, the horse's limb is fitted in the stop element and the weight forces it deep into said stop element, being perfectly supported and immobilised within it; in this way, the weight is suspended parallel to the user's thigh, giving the user greater freedom of manoeuvre to support the weight of the last small section of the horse's limb (corresponding to the horse's cannon and pastern), exponentially reducing the load, the pressures and the risk of injury.

This single-leg version of the present invention is also applicable to veterinary use, during the flexion test procedure to check for lameness, to locate and treat abscesses, to take local temperature, etc. These manoeuvres are usually carried out by resting the horse's limb against the professionals leg, using an opposing force with the leg, which is uncomfortable and dangerous for both (veterinarian and animal) and supporting the entire weight of the limb with the hand that holds it, with the joints of the arm, shoulder and dorsal and lumbar vertebrae suffering, whereas with the use of the apron with stop elements, the object of the present invention, the whole weight of the horse's limb rests on the apron stop element, the force exerted being vertical downwards.

Another advantage is that, in the preparation of the horse prior to entering the arena, during competitions, the rider gives the horse the last final preparations before the show, being dressed up in the regulation clothes for the competition, said clothing being white or light bridges. It is then that this apron, reduced to a single leg as it is shorter in length, allows the task to be carried out while maintaining neatness and discretion in the clothing, so highly valued by the rider for its presence and elegance, both necessary in competition, as well as for its high cost.

A further advantage is that the back of the apron incorporates one or more pockets, intended for holding fragile items, e.g. a mobile phone, which the practitioner/user needs to keep within reach, but protected from accidental blows from the animal.

It is not considered necessary to make this description more extensive, so that any person skilled in the art will understand the scope of the invention and the advantages derived from it. The materials, shape, size, position, direction and angle will be susceptible to variation provided that this does not alter the essence of the invention. The terms used in this specification must always be interpreted in a broad and not-limiting manner.

## Claims

1. A farrier's apron, made from a piece of flexible material, **characterised by** having means for supporting the horse's limbs (B), these means being stop elements (3), arranged and secured in different positions and areas of the front and/or rear of the surface of the apron.

2. The apron according to claim 1, **characterised in that** the stop elements (3) are made by solid pieces of hard-wearing material, such as leather, rope, gum, plastic, rubber, silicone or any other material, lined or not, flat or raised and with different shapes.

3. The apron according to claims 1 and 2, **characterised in that** said stop elements (3) are secured to the rear and/or front of the apron by means of stitching.

4. The apron according to claims 1 and 2, **characterised in that** said stop elements (3) are secured to the rear and/or front of the apron by fastening means such as Velcro or the like.

5. The apron according to claims 1 and 2, **characterised in that** said stop elements (3) are secured to the rear and/or front of the apron by means of secure bonding adhesive materials with a permanent gripping force.

6. The apron according to claims 1 and 2, **characterised in that** said stop elements (3) are secured to the rear and/or front of the apron by means of introducing the stop elements into pockets located in the apron.

7. The apron according to claims 1 and 2, **characterised in that** the stop elements (3) are formed by folds or seams in the fabric itself of the apron (1).
